# EUROPÄISCHE PATENTSCHRIFT

(11) **EP 0 784 456 B1**
(45) Veröffentlichungstag und Bekanntmachung des Hinweises auf die Patenterteilung: **21.11.2001**
(21) Anmeldenummer: 96919696.3
(22) Anmeldetag: 07.05.1996
(51) Int. Cl.: A61C 8/00

(54) **KIEFERIMPLANTAT**
JAW IMPLANT
IMPLANT POUR MACHOIRE

(30) Priorität: 12.05.1995 DE 19517459
(43) Veröffentlichungstag der Anmeldung: 23.07.1997
(73) Patentinhaber: Bauer, Ernst, Dr., D-61231 Bad Nauheim (DE)
(72) Erfinder: Bauer, Ernst, Dr., D-61231 Bad Nauheim (DE)
(74) Vertreter: Luderschmidt, Schüler & Partner GbR
(86) Internationale Anmeldenummer: EP9601901
(87) Internationale Veröffentlichungsnummer: WO9635393

(56) Entgegenhaltungen:
- EP-A- 0 114 955
- WO-A-93/11717
- WO-A-95/31152
- DE-A- 3 538 238
- US-A- 3 708 883
- US-A- 5 004 421
- US-A- 5 141 435
- US-A- 5 470 230

## Beschreibung

Die Erfindung betrifft ein Kieferimplantat nach dem Oberbegriff des Patentanspruchs 1.

Kieferimplantate sind in zahlreichen Ausführungsformen bekannt. Zu den bekannten Kieferimplantaten zählen Nadelimplantate, Klingen- oder Blattimplantate und insbesondere Schraubenimplantate. Die bekannten Schraubenimplantate weisen einen in den Kieferknochen einschraubbaren konischen Implantatkörper auf, der mit einem Implantatkopf zur Aufnahme eines Zahnersatzes oder einer Subkonstruktion versehen ist.

Es hat sich gezeigt, daß die Ausbildung und der Einsatz der subperiostal oder intraossal implantierten Schraubenkörper nicht unproblematisch ist. Bei den bekannten Schraubenimplantaten kann nicht ausgeschlossen werden, daß die Knochensubstanz durch das verhältnismäßig tiefe Eindringen der schneidenden Gewindegänge zerstört wird. Aufgrund der zerstörten Gewebeteile und der auftretenden Leerräume im Bereich des Implantats ist die Primärstabilität nicht gewährleistet, von der die spätere Retention abhängig ist und die für einen kraftschlüssigen Verbund von Implantat und Knochen maßgeblich verantwortlich ist. Eine besondere Bedeutung wird bei Schraubenimplantaten der Form des Gewindes zugemessen. So schlägt beispielsweise die DE-OS 31 36 602 ein Schraubenimplantat vor, das einen konischen Schraubenschaft mit einer Gewinde-Helix aufweist, um dem Implantat eine größere Festigkeit im implantierten Zustand zu verleihen.

EP-A-0 114 955 beschreibt ein Kieferimplantat mit einem schaftförmigen Implantatkörper, der in seinem unteren, einführseitigen Abschnitt als Spreizkkörper ausgebildet ist. Das bekannte Implantat ist nicht als Schraubenimplantat ausgebildet. Es wird in eine in dem Kieferknochen anzulegende Bohrung eingesetzt und durch Spreizen des Implantatfußes verankert.

Für einen dauerhaften Halt des Implantats ist nicht nur entscheidend, daß eine Zerstörung der Knochensubstanz beim Einschneiden des Gewindes vermieden wird, sondern von besonderer Bedeutung ist auch, daß das Implantat an seinen beiden Enden eine Abstützung im Knochen, also der kompakten Knochensubstanz des Alveolarkammes und der Gegenkortikalis finden. Die bekannten Schraubenimplantate sollen sich daher an der dem Eintritt gegenüberliegenden Knochensubstanz des Unterkiefers mit der halbkugelförmigen Spitze ihres konischen Schraubenschaftes abstützen. Es hat sich jedoch gezeigt, daß trotz der Abstützung ein Eindringen der bekannten Schraubenimplantate in den Kieferknochen aufgrund der hohen Kaudruckbelastung nicht auszuschließen ist. Die großen axialen Kräfte, die eine starke Belastung des Knochengewebes zur Folge haben, können ein Lockern des Implantats bewirken, so daß Undichtigkeiten im Bereich des Eintritts des Implantatkörpers in den Kieferknochen auftreten können, die Infektionsherde darstellen.

Der Erfindung liegt die Aufgabe zugrunde, ein Schraubenimplantat der eingangs genannten Art zu schaffen, das eine verbesserte Verankerung im Kieferknochen ermöglicht und hohen Kaudruckbelastungen standhält.

Die Lösung der Aufgabe erfolgt erfindungsgemäß mit den im Patentanspruch 1 angegebenen Merkmalen.

Der Implantatfuß des einschraubbaren Implantatkörpers ist bei dem erfindungsgemäßen Set zur Herstellung eines Kieferimplantats als Spreizkörper ausgebildet, der mehrere seitlich abspreizbare Spreizelemente aufweist. Mit dem als Spreizkörper ausgebildeten Fußteil findet der Implantatkörper an der Knochensubstanz der Gegenkortikalis eine ausreichende Abstützung. Da sich der Implantatkörper mit den Spreizelementen an der Gegenkortikalis mehrfach abstützt, können die bei den Kaubewegungen axial in den Implantatkörper eingeleiteten Kräfte besser abgefangen werden, wodurch die Haltbarkeit des Implantats verbessert wird. Die Belastung konzentriert sich nicht auf einen einzigen Punkt, sondern wird über einen größeren Bereich verteilt.

Obwohl der Bereich, in dem sich der Implantatkörper an der Gegenkortikalis abstützt, gegenüber den bekannten Schraubenimplantaten vergrößert ist, macht der Implantatkörper des erfindungsgemäßen Sets einen nur verhältnismäßig kleinen Eingriff erforderlich, bei dem nur wenig Knochensubstanz entfernt wird. Eine Erweiterung des Fußteils durch Abspreizen der Spreizelemente erfolgt erst dann, wenn das Implantat bereits in den Kieferknochen eingeschraubt ist.

Die Spreizelemente schaffen nicht nur eine verbreiterte Auflagefläche, sondern pressen sich in die kontaktierte spongiose Knochensubstanz, d.h. das Knochengewebe, wodurch ein kraftschlüssiger Verbund und eine hohe Stabilität erreicht wird. Ferner ist von Vorteil, daß die zwischen den Spreizelementen liegenden Zwischenräume von der spongiosen Knochensubstanz durchdrungen werden und der Implantatkörper somit fest mit dem Knochen verwachsen kann. Damit wird eine dauerhafte Fixierung des Implantatkörpers im Kieferknochen erreicht.

Der Implantatkörper ist vorteilhafterweise ein langgestreckter, einen durchgehenden Kanal aufweisender Hohlkörper, wobei der Fußteil des Hohlkörpers in Längsrichtung unter Ausbildung der Spreizelemente mehrfach geschlitzt ist und sich der durchgehende Kanal im Bereich des Fußteils verengt. Die zungenförmigen Spreizelemente lassen sich somit durch Einschrauben eines Stiftes in den hülsenförmigen Implantatkörper auf einfache Weise abspreizen. Eine derartige Ausbildung des Implantatkörpers ist insofern von Vorteil, als daß der Stift zum Auslenken der Spreizelemente gleichsam zur Verankerung des Implantatkopfes oder der Subkonstruktion dienen kann.

Der hülsenförmige Implantatkörper kann einstückig ausgebildet sein. Aus fertigungstechnischen Gründen kann es aber vorteilhaft sein, den Implantatkörper aus zwei Teilen herzustellen, von denen das eine Teil das Schraubgewinde zum Einschrauben des Implantatkörpers und das andere Teil den Spreizkörper umfaßt.

Um eine ausreichende Abstützung zu erreichen, ist der Implantatkörper in einer bevorzugten Ausführungsform unter Ausbildung von vier Spreizelementen kreuzweise geschlitzt. Um die Spreizelemente abspreizen zu können, weisen diese vorzugsweise nach innen vorspringende Ansätze auf. Das Abspreizen der Spreizelemente kann aber auch dadurch erreicht werden, daß der Stift an seinem einführseitigen Ende verbreitert ist, während der Kanal im Bereich des Implantatkörperunterteils einen über seine Länge gleichbleibenden Querschnitt aufweist.

Der Implantatkopf ist vorteilhafterweise als Schraubkappe ausgebildet. Um den Implantatkopf auf den Stift aufschrauben zu können, ist die Länge des Stiftes so bemessen, daß der Stift das Oberteil des Implantatkörpers auch dann überragt, wenn er vollständig in den Implantatkörper eingeschraubt ist. An der vorzugsweise konischen Schraubkappe kann der Zahnersatz befestigt werden. Die Schraubkappe kann aber auch zur Aufnahme der bekannten Subkonstruktionen für den Zahnersatz dienen.

Um einen dichten Abschluß zu erhalten, ist das Oberteil des Implantatkörpers vorzugsweise als konische Schraube ausgebildet. Zum Einlegen des Implantats wird zunächst mit einem Implantatbohrer vorgebohrt. Der Implantatkörper wird durch das vorgebohrte Implantatbett dann axial geführt.

Die das Implantat bildenden Teile, nämlich der Implantatkörper, der Stift und der Implantatkopf bestehen vorzugweise aus einer Titanlegierung und die Oberfläche der Teile ist mit einer Schutzschicht aus Titanoxid passiviert, um eine gute Verträglichkeit zu gewährleisten.

Nachfolgend wird unter Bezugnahme auf die Zeichnungen ein Ausführungsbeispiel der Erfindung näher erläutert.

Es zeigen:
- Fig. 1: den Implantatkörper des Sets zur Herstellung eines Kieferimplantats in der Seitenansicht,
- Fig. 2: eine Ansicht des Implantatkörpers aus der Richtung des Pfeils II von Fig. 1,
- Fig. 3: eine Ansicht des Implantatkörpers aus der Richtung des Pfeils III-III von Fig. 1,
- Fig. 4: einen Schnitt durch den Implantatkörper entlang der Linie IV-IV von Fig. 1,
- Fig. 5: den zu dem Set zur Herstellung des Kieferimplantats gehörenden Stift in der Seitenansicht,
- Fig. 6: einen Längsschnitt durch den zu dem Set zur Herstellung des Kieferimplantats gehörenden Implantatkopf,
- Fig. 7: den Implantatkopf in der Ansicht aus der Richtung des Pfeils VII von Fig. 6,
- Fig. 8: eine Explosionsdarstellung des Implantatkörpers mit Stift, Montagehülse und einer Drehhilfe zum Einschrauben des Implantatkörpers in der Seitenansicht, und
- Fig. 9: den Implantatkörper mit abgespreizten Spreizelementen und aufgeschraubtem Implantatkopf in der Seitenansicht.

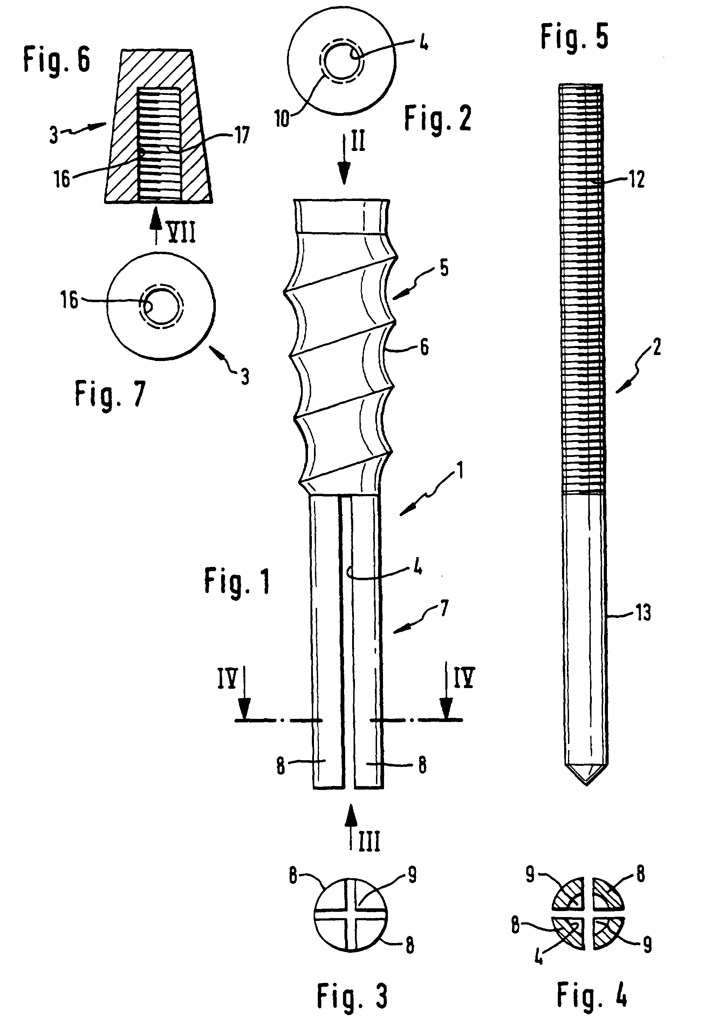

Das Set zur Herstellung eines Kieferimplantats weist einen in den Kieferknochen einschraubbaren Implantatkörper 1 (Fig. 1), einen in den Implantatkörper 1 einschraubbaren Stift 2 (Fig. 5) und einen auf den Stift 2 aufschraubbaren Implantatkopf 3 (Fig. 6) zur Aufnahme des in den Figuren nicht gezeigten Zahnersatzes oder einer Subkonstruktion auf. Der Implantatkörper 1 wird nachfolgend unter Bezugnahme auf die Fign. 1 bis 4 näher erläutert.

Fig. 1 zeigt den Implantatkörper 1 in der Seitenansicht. Der Implantatkörper 1 ist ein langgestreckter, mit einem durchgehenden Kanal 4 versehener Hohlkörper. Die obere Hälfte des Implantatkörpers 1 ist als konische Schraube 5 mit konkaven Gewindegängen 6 ausgebildet, wobei sich die konische Schraube zum einführseitigen, unteren Ende des Implantatkörpers 1 hin verjüngt. An die obere Hälfte des Implantatkörpers 1 schließt sich ein zylindrischer Spreizkörper 7 an. Hierzu ist die untere Hälfte des Implantatkörpers 1 unter Ausbildung von vier langgestreckten zungenförmigen Spreizelementen 8 kreuzweise in Längsrichtung geschlitzt (Fig. 3). Die Spreizelemente 8 weisen an ihrem unteren Ende jeweils einen nach innen weisenden Ansatz 9 auf (Fig. 4).

Der Kanal 4 des Implantatkörpers 1 hat einen kreisförmigen Querschnitt (Fig. 2). Der sich durch die obere Hälfte des Implantatkörpers 1 erstreckende Teilabschnitt der Bohrung 4 ist mit einem Innengewinde 10 versehen, während der sich durch die untere Hälfte des Implantatkörpers 1 erstreckende Teilabschnitt der Bohrung 4 gewindefrei ist.

Fig. 5 zeigt den zu dem Set zur Herstellung des Kieferimplantats gehörenden Stift 2 in der Seitenansicht. Der in die Bohrung 4 des Implantatkörpers 1 einschraubbare Stift 2 weist ein der Gewindebohrung des Implantatkörpers entsprechendes Außengewinde 12 auf, das sich bis zur Mitte des Stiftes 11 hin erstreckt. Der untere gewindefreie Abschnitt 13 des Stiftes hat eine Länge, die der Länge der unteren längsgeschlitzten Hälfte des Implantatkörpers 1 entspricht. Der Stift 2 selbst ist länger als der Implantatkörper 1.

Fig. 6 zeigt den zu dem Set zur Herstellung des Kieferimplantats gehörenden Implantatkopf 3, der auf den den Implantatkörper 1 überragenden Teil 15 des Gewindestiftes 2 aufschraubbar ist. Der als Schraubkappe ausgebildete konische Implantatkopf 3 weist eine axiale Bohrung 16 mit einem dem Außengewinde 12 des Stiftes 2 entsprechenden Innengewinde 17 auf (Fign. 6 und 7).

Der Implantatkörper 1, der Stift 2 und der Implantatkopf 3 bestehen aus einer Titanlegierung und die Oberfläche der Teile ist mit einer Schutzschicht aus Titanoxid nach ASTM F 86-68 passiviert.

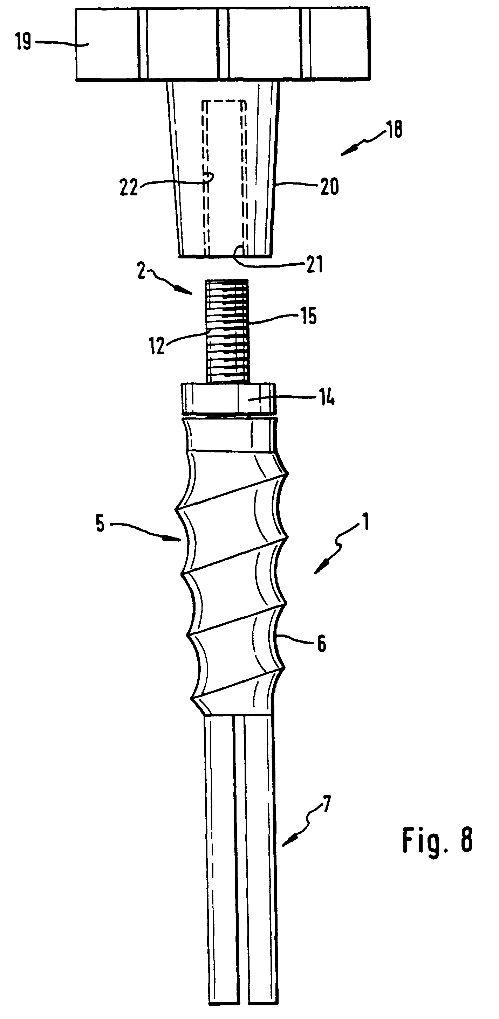

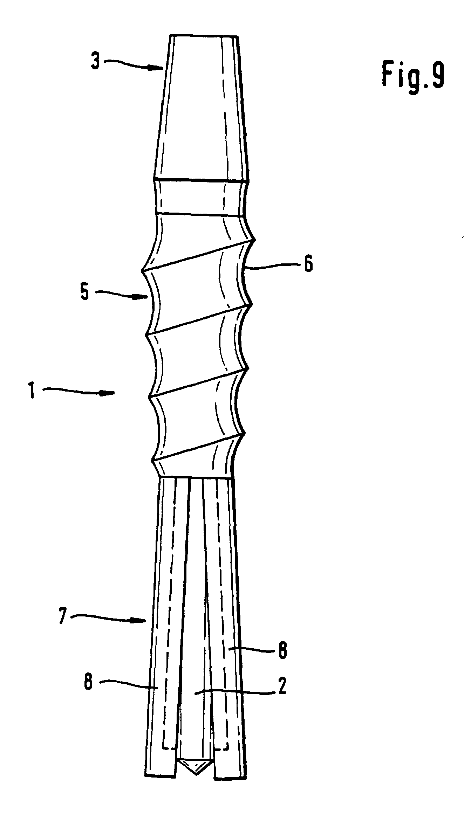

Unter Bezugnahme auf die Fign. 8 und 9 werden nachfolgend die für das Einlegen des Implantats erforderlichen Arbeitsschritte erläutert.

Zum Einlegen des Implantats wird der Stift 2 zunächst von Hand lose in den Implantatkörper 1 eingeschraubt, bis dessen vordere Spitze auf den vorspringenden Ansätzen 9 der Spreizelemente 8 aufliegt. Anschließend wird eine Distanzhülse 14 auf den Stift 2 aufgesetzt. Zum Einschrauben des Implantatkörpers 1 in den Kieferknochen umfaßt das Set ferner eine Drehhilfe 18. Die Drehhilfe 18 besteht aus einem gerändelten Drehkopf 19 mit einem Schaft 20, der eine axiale Bohrung 21 aufweist, die mit einem dem Außengewinde 12 des Stiftes 2 entsprechenden Innengewinde 22 versehen ist. Die Drehhilfe 18 und der Implantatkörper 1 werden unter Zwischenlage der Distanzhülse 14 fest miteinander verschraubt, ohne daß der Stift 2 weiter in den Implantatkörper eingedreht wird, wodurch sich die Spreizelemente 8 abspreizen würden.

Nach der Vorbereitung des Implantatkörpers 1 wird mit einem Implantatbohrer ein enger Kanal in den Kieferknochen vorgebohrt, dessen Durchmesser dem Durchmesser des unteren zylindrischen Abschnitts des Implantatkörpers 1 entspricht. Durch den Bohrkanal kann nun mittels einer Sonde die genaue Tiefe vom Alveolarkamm bis zur Gegenkortikalis gemessen und die Länge des Implantatkörpers überprüft werden. Daraufhin wird der Implantatkörper 1 in den Kieferknochen mittels der Drehhilfe 18 eingeschraubt. Anschließend wird in einfachen und zügig aufeinanderfolgenden Arbeitsschritten die Drehhilfe 18 abgedreht, die Distanzhülse 14 abgenommen und die Drehhilfe wieder aufgedreht. Der Stift 2 kann jetzt vollständig in den Implantatkörper 1 eingeschraubt werden, wodurch sich die Spreizelemente 8 seitlich abspreizen. Der Winkel, um den die Spreizelemente 8 gegenüber der Längsachse des Implantatkörpers abgespreizt werden, sollte etwa zwischen 5 und 20° liegen. Nach Abschrauben der Drehhilfe 18 wird nun eine in den Figuren nicht dargestellte, mit einem Innengewinde versehene Schutzhülse aus Kunststoff auf den vorstehenden Abschnitt 15 des Stifts 2 aufgeschraubt, um ein Verwachsen des Zahnfleisches mit dem Stift zu vermeiden. Die Schutzkappe wird später wieder abgenommen und der konische Implantatkopf 3 wird anstelle der Schutzkappe auf den Stift 2 aufgeschraubt (Fig. 9). An dem Implantatkopf kann dann der Zahnersatz oder eine Subkonstruktion für den Zahnersatz auf bekannte Weise befestigt werden.

## Patentansprüche

1. Set zur Herstellung eines Kieferimplantates, das einen in den Kieferknochen einsetzbaren Implantatkörper (1) und einen an dem Implantatkörper befestigbaren Implantatkopf (3) zur Aufnahme eines Zahnersatzes oder einer Subkonstruktion aufweist, wobei der einführseitige, untere Abschnitt des Implantatkörpers (1) als Spreizkörper (7) ausgebildet ist, der mehrere nach dem Einsetzen des Implantatkörpers (1) in den Kieferknochen abspreizbare Spreizelemente (8) aufweist, **dadurch gekennzeichnet, daß** der Implantatkörper mit einem Außengewinde (6) versehen ist, wobei das Außengewinde (6) in dem oberen Abschnitt des Implantatkörpers (1) ausgebildet ist.

2. Set zur Herstellung eines Kieferimplantats nach Anspruch 1, **dadurch gekennzeichnet, daß** der Implantatkörper (1) ein langgestreckter, einen durchgehenden Kanal (4) aufweisender Hohlkörper ist, dessen einführseitiger, unterer Abschnitt in Längsrichtung unter Ausbildung der Spreizelemente (8) mehrfach geschlitzt ist, wobei der Kanal (4) im Bereich des unteren Abschnitts verengt ist.

3. Set zur Herstellung eines Kieferimplantats nach Anspruch 2, **dadurch gekennzeichnet, daß** das Set ferner einen mit einem Außengewinde (12) versehenen Stift (2) umfaßt, der zum Abspreizen der Spreizelemente (8) in den Implantatkörper (1) einschraubbar ist.

4. Set zur Herstellung eines Kieferimplantats nach Anspruch 2 oder 3, **dadurch gekennzeichnet, daß** die Spreizelemente (8) nach innen weisende Ansätze (9) aufweisen.

5. Set zur Herstellung eines Kieferimplantats nach einem der Ansprüche 2 bis 4, **dadurch gekennzeichnet, daß** der Implantatkörper (1) unter Ausbildung von vier Spreizelementen (8) kreuzweise geschlitzt ist.

6. Set zur Herstellung eines Kieferimplantats nach einem der Ansprüche 3 bis 5, **dadurch gekennzeichnet, daß** die Länge des Stiftes (2) so bemessen ist, daß der in den Implantatkörper (1) eingeschraubte Stift (11) den Implantatkörper überragt.

7. Set zur Herstellung eines Kieferimplantats nach einem der Ansprüche 1 bis 6, **dadurch gekennzeichnet, daß** der Implantatkopf (3) als Schraubkappe ausgebildet ist.

8. Set zur Herstellung eines Kieferimplantats nach einem der Ansprüche 1 bis 7, **dadurch gekennzeichnet, daß** der obere Abschnitt des Implantatkörpers (1) als konische Schraube (5) ausgebildet ist.

9. Set zur Herstellung eines Kieferimplantats nach einem der Ansprüche 1 bis 8, **dadurch gekennzeichnet, daß** die Teile (1, 2, 3) des Implantats aus einer Titanlegierung bestehen und daß die Oberfläche der Teile mit einer Schutzschicht aus Titanoxid passiviert ist.

## Claims

1. Set for the making of a jaw implant comprising an implant body (1) insertable into the jaw bone and an implant head (3) anchorable at said implant body for the accomodation of a denture or a subconstruction thereof, the lower section of said implant body (1) at the side to be inserted being developped as a straddle body (7) which comprises several straddle elements (8) which can straddle when the implant body has been inserted into the jaw bone,
**characterized in that**
said implant body is provided with an external screw thread (6), said external screw thread (6) being formed in the upper section of said implant body (7).

2. Set for the making of a jaw implant according to claim 1, **characterized in that** said implant body (1) is an oblong hollow body having a throughwhole (4), whereof the lower section at the side to be inserted is repeatedly longitudinally slotted with formation of said straddle elements (8), said throughwhole (4) being narrowed in the region of its lower section.

3. Set for the making of a jaw implant according to claim 2, **characterized in that** the set additionally comprises a gudgeon (2) provided with an external screw thread (6), said gudgeon being screwable in said implant body (1) such as to spread apart said straddle elements (8).

4. Set for the making of a jaw implant according to claims 2 or 3, **characterized in that** said straddle elements (8) comprise lugs (9) that point inwards.

5. Set for the making of a jaw implant according to one of claims 2 to 4, **characterized in that** said implant body (1) is cross-slotted such as to form four straddle elements (8).

6. Set for the making of a jaw implant according to one of claims 3 to 5, **characterized in that** the length of said gudgeon (2) is designed such that the gudgeon (11), when screwed in said implant body (1), rises above said implant body.

7. Set for the making of a jaw implant according to one of claims 1 to 6, **characterized** - in that said implant head (3) is designed as a screw cap.

8. Set for the making of a jaw implant according to one of claims 1 to 7, **characterized in that** the upper section of said implant body (1) is designed as a cone-shaped screw (5).

9. Set for the making of a jaw implant according to one of claims 1 to 8, **characterized in that** the pieces (1, 2, 3) of the implant are made of a titanium alloy and **in that** the surfaces of said pieces are rendered passive by a protective layer made of titanium oxide.

## Revendications

1. Ensemble permettant de réaliser un implant maxillaire, présentant un corps d'implant (1) pouvant être introduit dans l'os maxillaire et une tête d'implant (3) pouvant être fixée sur le corps d'implant afin de recevoir une dent de remplacement ou une construction sous-jacente, la portion inférieure côté insertion du corps d'implant (1) étant réalisée sous la forme d'un élément expansible (7) qui présente plusieurs éléments expansibles (8) pouvant être écartés après la pose de l'implant (1) dans l'os maxillaire, **caractérisé en ce que** le corps d'implant est muni d'un filetage extérieur (6), ledit filetage extérieur (6) étant formé dans la portion supérieure du corps d'implant (1).

2. Ensemble permettant de réaliser un implant maxillaire selon la revendication 1, **caractérisé en ce que** le corps d'implant (1) est un élément creux oblong présentant un canal traversant (4) dont la portion inférieure est fendue plusieurs fois dans le sens longitudinal de manière à former les éléments expansibles (8), ledit canal (4) étant rétréci au niveau de la portion inférieure.

3. Ensemble permettant de réaliser un implant maxillaire selon la revendication 2, **caractérisé en ce que** l'ensemble comprend en plus une broche (2) munie d'un filetage extérieur (12) qui se visse dans le corps d'implant (1) pour écarter les éléments expansibles (8).

4. Ensemble permettant de réaliser un implant maxillaire selon la revendication 2 ou la revendication 3, **caractérisé en ce que** les éléments expansibles (8) présentent des saillies (9) dirigées vers l'intérieur.

5. Ensemble permettant de réaliser un implant maxillaire selon l'une des revendications 2 à 4, **caractérisé en ce que** le corps d'implant (1) est fendu en croix de manière à former quatre éléments expansibles (8).

6. Ensemble permettant de réaliser un implant maxillaire selon l'une des revendications 3 à 5, **caractérisé en ce que** la longueur de la broche (2) est déterminée de façon que la broche (11) vissée dans le corps d'implant (1) dépasse du corps d'implant.

7. Ensemble permettant de réaliser un implant maxillaire selon l'une des revendications 1 à 6, **caractérisé en ce que** la tête d'implant (3) est réalisée sous la forme d'un capuchon à vis.

8. Ensemble permettant de réaliser un implant maxillaire selon l'une des revendications 1 à 7, **caractérisé en ce que** la portion supérieure du corps d'implant (1) est réalisée sous la forme d'une vis conique (5).

9. Ensemble permettant de réaliser un implant maxillaire selon l'une des revendications 1 à 8, **caractérisé en ce que** les pièces (1, 2, 3) de l'implant se composent d'un alliage de titane et **en ce que** la surface de ces pièces est passivée au moyen d'une couche de protection en oxyde de titane.
